Europäisches Patentamt

**European Patent Office**

Office européen des brevets

(19)

(11) Publication number: **0 027 911**

**B1**

(12) **EUROPEAN PATENT SPECIFICATION**

(45) Date of publication of patent specification: **27.06.84**

(21) Application number: **80105914.8**

(22) Date of filing: **30.09.80**

(51) Int. Cl.³: **B 01 F 3/04** //B01F7/24, C02F3/14, C12M1/04

(54) **Apparatus for contacting liquid with a gas.**

(30) Priority: **02.10.79 US 81175**

(43) Date of publication of application:
**06.05.81 Bulletin 81/18**

(45) Publication of the grant of the patent:
**27.06.84 Bulletin 84/26**

(84) Designated Contracting States:
**DE FR GB IT**

(56) References cited:
**CH - A - 509 943**
**CH - A - 563 801**
**DE - U - 7 222 305**
**GB - A - 1 450 612**
**GB - A - 1 495 902**
**US - A - 4 017 565**

(73) Proprietor: **UNION CARBIDE CORPORATION**
**Old Ridgebury Road**
**Danbury Connecticut 06817 (US)**

(72) Inventor: **Roeckel, Winfred**
**Taunusstrasse 17**
**D-6451 Neuberg-Ravolzhausen (DE)**
Inventor: **Conti, John Alfonse**
**18 Parkedge Court**
**Tonawanda (14150) N.Y. (US)**
Inventor: **Scaccia, Carl**
**R.D. Nr. 5**
**Rauber Hill Wellsville (14895) N.Y. (US)**

(74) Representative: **Schwan, Gerhard, Dipl.-Ing.**
**Elfenstrasse 32**
**D-8000 München 83 (DE)**

Courier Press, Leamington Spa, England.

## Description

This invention relates to apparatus for contacting liquid with a gas comprising a tank containing a body of liquid; a generally tubular draft member positioned in the tank with its upper end proximate to but beneath normal liquid level to form a submerged liquid inlet, and with its lower end vertically spaced from the bottom of the tank to form a submerged liquid outlet; a rotatable impeller positioned in the draft member at least 0.35 times the draft member diameter below the liquid inlet for axial downflow pumping of liquid through the draft member and inducement of circulation of liquid discharged from the draft member liquid outlet through the body of liquid to the draft member liquid inlet; means for rotating the impeller; and gas flow passage means having an inlet exposed to a source of gas and an outlet positioned in the liquid flow path to said impeller, whereby liquid flowing through the draft member liquid inlet under action of said impeller aspirates gas from the gas flow passage means to effect gas-liquid contacting in the liquid pumped by the impeller.

In the field of activated sludge sewage treatment, an aeration device must satisfy two basic requirements:

(1) the aeration device must transfer sufficient oxygen into the mixed liquor to support biological activity and

(2) the aeration device must satisfactorily mix the contents of the aeration vessel to avoid sedimentation and thereby maintain the pollutants in contact with the biological population. Furthermore, these two objectives are preferably accomplished with a minimum expenditure of power.

The prior art has typically relied on three distinct types of aeration apparatus to satisfy the requirements for activated sludge sewage treatment: submerged porous diffusers, submerged turbines and surface aeration devices.

The submerged porous diffuser represents the simplest aerator design. In the operation of this device, an aeration gas, typically air, is compressed and forced through the apertures of a stationary porous medium located at the bottom of a deep vessel containing sewage to be treated.

In submerged turbine aeration systems, the aeration gas is compressed and fed to the bottom of a vessel beneath a rotating impeller. The impeller may be of various types, as for example a radially discharging flat blade turbine, which both mixes the contents of the sewage treatment tank and breaks the aeration gas into small bubbles. Such operation ensures that the contents of the aeration tank are thoroughly and intimately contacted with the aeration gas, and allows independent control of the power consumption of the aeration device and the gas flow rate. As a result, very high oxygen, transfer rates are possible in practice.

Such advantage, however, is offset economically and structurally by the mechanical complexity associated with the requirement of a long shaft for the impeller and submerged bearings as well as by the need for a separate gas compression and recirculation system.

Another type of commonly employed wastewater aeration apparatus is the so-called surface aerator, in which bulk mixing of the contents of the treatment vessel is promoted by upward and outward circulation of liquid. Surface aerators typically have the highest efficiencies among commercially available aeration apparatus. Furthermore, since the operation of surface aerators obviates the need for gas compression, and operation of the surface aerator at the liquid surface avoids the need for mechanical complexities associated with a long submerged shaft and submerged bearings, surface aeration devices have been widely used in practice. It is well known, however, that the highest efficiency values are obtained at low rotational speeds for the surface aeration device. Since commercially available drive motors typically operate at high rotational speeds, efficient operation requires the use of a complex gear reduction unit. The need for such gear reduction unit substantially increases both the capital and operating costs of the aeration system. In addition, operation in deep tanks is not possible unless rotating impeller means are disposed in the lower portion of the tank to augment mixing of the tank contents; such modification reduces the efficiency of the entire apparatus as well as increasing the mechanical complexity thereof.

In light of the foregoing, it would be advantageous to provide an aeration device which would combine the advantages of the submerged aeration apparatus, as well as the advantages of the surface aerator, while avoiding their intrinsic deficiencies.

Accordingly, it is an object of the present invention to provide a downwardly pumping submerged aeration system which operates by gas aspiration and thus avoids the need for gas compression while providing a high degree of gas-liquid contacting, which system operates proximate to the normal liquid surface of liquid in the aeration tank, thereby avoiding the power penalty associated with gas-liquid contacting under a large hydrostatic head of liquid, and which system allows substantially higher rotational speeds than are optimally employed with surface aerators.

The apparatus for contacting liquid with a gas according to the invention is provided with liquid flow restriction means comprising a horizontally extending plate member positioned at or proximate to the liquid inlet of the draft member and above the impeller; the plate member provides at least one liquid passage for flow of liquid entering the draft member to the impeller; the restriction means restricts the cross-sectional liquid flow area of the liquid inlet to from 0.7 to 1.0 times the cross-sectional area of the draft member, and the gas flow passage means outlet is positioned at the flow restriction means.

The use of liquid flow restriction means in liquid/gas contacting apparatus per se is known from US—A—4 017 565. However, in the prior apparatus the impeller is placed within a draft tube at the lower end of the treatment vessel. Further, the cross-sectional area to which flow is restricted is much smaller than 0.7 to 1.0 times the cross-sectional area of the draft tube. This is effected by the use of a Venturi-shaped annular gap, which is well below the inlet rather than proximate to it. Furthermore a liquid/gas contacting apparatus is known (CH—A—509 943) in which liquid flow restriction means is positioned below the down pumping impeller. Again the restriction is much greater than 0.7 to 1.0 times the cross-sectional area of the draft member.

Rather than designing the liquid flow restriction means of the present invention to maximize the velocity change and thereby the pressure differential across the liquid flow restriction means, which accordingly will result in maximum gas aspiration, it has unexpectedly been found that optimum aeration performance occurs when the liquid flow restriction means are positioned at or proximate to the draft member liquid inlet, restricting cross-sectional liquid flow area of the liquid inlet to from 0.70 to 1.0 times cross-sectional area of the draft member.

As used herein, the term "normal liquid level in the tank" means the liquid level in the tank when the gas-liquid contacting apparatus is not in operation. The term "cross-sectional liquid flow area" means the cross-sectional area of the draft member liquid inlet through which liquid entering the draft member is flowed.

Further preferred embodiments are claimed in claims 2 to 14.

The invention is described in more detail with reference to the drawings.

Figure 1 is a sectional, elevational view of an apparatus for contacting liquid with a gas according to one embodiment of the present invention.

Figure 2 is a plan view of the Figure 1 apparatus, taken along line 2—2, showing the details of construction of liquid flow restriction means comprising a horizontal extending plate member.

Figure 3 is a sectional, elevational view of a gas-liquid contacting apparatus according to another embodiment of the invention.

Figure 4 is a plan view, taken along line 4—4 of Figure 3, showing the details of construction of liquid flow restriction means comprising a horizontally extending plate member.

Figure 5 is a graph of normalized standard transfer efficiency as a function of the ratio of cross-sectional liquid flow area of the liquid inlet to cross-sectional area of the draft member, for an illustrative embodiment of the present invention.

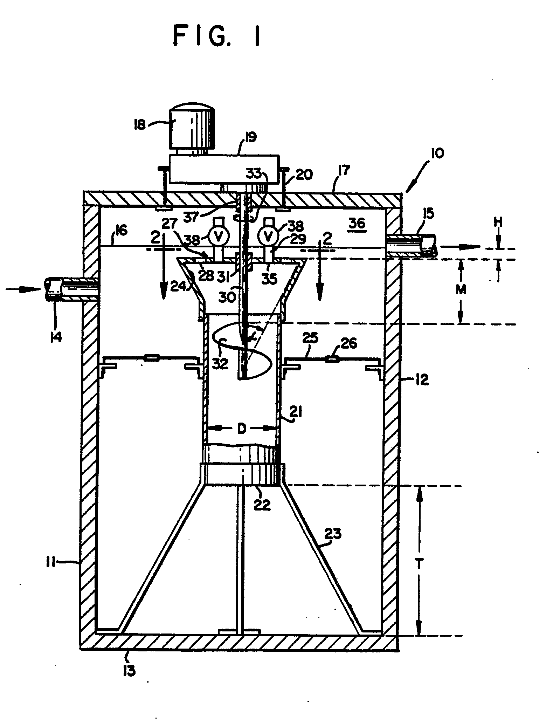

Referring now to the drawings, Figure 1 is a sectional, elevational view of gas-liquid contacting apparatus according to the present invention. The aeration tank 10 comprises sidewalls 11 and 12 and bottom member 13, filled with the liquid to be aerated to a level 16 via inlet conduit 14. Aerated treated liquid is withdrawn from the aeration tank 10 through conduit 15. At the top of the aeration tank is a bridge 17 upon which the motor drive means 18 and gear reduction unit 19 are supported. The motor and gear reduction unit are attached to the bridge 17 by connections 20. Shaft member 30 is connected to the gear reduction unit 19 by bushing 37 in the bridge 17. At the lower end of the shaft member 30, a rotatable axial pumping impeller, helical screw impeller 32, is connected.

The shaft/rotatable impeller assembly is supported within the tank inside a generally tubular draft member 21. The generally tubular draft member is oriented with its central axis aligned vertically and positioned in the tank with its upper end proximate to but beneath normal liquid level in the tank to form a submerged liquid inlet, and with its lower end vertically spaced from the bottom of the tank to form a submerged liquid outlet 22. The draft member is supported in the tank by means of support struts 23 and a collar at its lower end and by the means of the side support members 25 at its intermediate portion. The tension on the side support means can be adjusted by adjusting means 26. The draft member 21 extends from just above the top of the helical impeller down into the tank near the vessel midpoint. The draft member can also be constructed to extend to a point closer to the bottom of the tank 10.

In this embodiment, the generally tubular draft member has a cylindrical main body portion with an inverted frustoconical inlet section 24. The enclosing walls of the inverted frustoconical inlet section form an angle $\alpha$ with the draft member central axis of from 10° to 40°, as for example 27°. The upper end of the draft member inlet section terminates below the liquid level 16 and preferably the submergence of the draft member liquid inlet H is from 0.10 to 1.25 times the diameter D of the draft member, beneath the normal liquid level in the tank. In practice, this submergence of the draft member liquid inlet may be from 7.6 cm to 91 cm beneath the normal liquid level in the tank. The inverted frustoconical inlet section preferably has a height of from 0.25 to 0.75 times the diameter D of the cylindrical main body portion of the draft member. As the inside angle of the frustoconical inlet section increases, the vertical height of the inlet section should commensurately decrease.

Attached to the top of the frustoconical inlet section 24 is a liquid flow restriction means 27 which is positioned at the draft member liquid inlet to restrict the cross-sectional liquid flow area to the liquid inlet, i.e., the "open area" of the draft member liquid inlet, measured in a horizontal plane at the point of restriction of the inlet, which is available for liquid flow into the draft member, from 0.70 to 1.0 times the cross-sectional area $(\pi D^2/4)$ of the draft member. The cross-sectional area of the draft member is the cross-sectional area of the main cylindrical body portion of the draft member, measured in a horizontal plane perpendicular to the central axis of the draft member. In this embodiment the liquid flow restriction means comprise a horizontally extending plate member positioned at the liquid inlet thereof providing liquid passages for flowing liquid entering the draft member to the axial pumping impeller 32. The horizontally extending plate member is provided with a plurality of gas inlet openings 35 through which gas conduits 29 extend forming the gas flow passage means. These gas flow conduits extend vertically with their upper ends positioned in the gas space 36 above the normal liquid surface and with their lower ends extending through and leak-tightly enclosing each of the gas flow openings in the plate member. Each conduit terminates at a lower end closely adjacent the plate member, so that during operation gas is drawn into liquid flowing downwardly through the liquid passages 28 under the action of the axial pumping impeller 32, to effect gas-liquid contacting. The upper ends of the gas conduits 29 are fitted with valves 38 for controlling the flow rate of gas therethrough. The liquid flow restriction means is also provided with a bushing or seal 31 for the shaft member 30.

In operation, the shaft member 30 is rotated in the direction shown by arrow 33 by means of motor drive means 18 and gear reduction unit 19 so as to pump liquid downwardly through the draft member 21. In this manner, liquid is drawn through the plurality of liquid flow openings 28 and, by rotating the impeller 32 at a sufficient rate, the flow of liquid through the liquid flow passages 28 induces a flow of gas through the conduits 29 by aspiration and effects gas entrainment in the downwardly flowing liquid.

A gas/liquid mixture is thereby formed in the inlet section 24 and the resultant mixture is then pumped to the bottom of the tank by impeller 32 through the draft member 21. It has been found that devices of the type shown in Figure 1 exhibit optimum operating efficiencies similar to those achieved by surface aerator devices at substantially higher rotational speeds than are optimally employed with surface aerators (i.e., 30—40 rpm) as for example on the order of above 150 rpm.

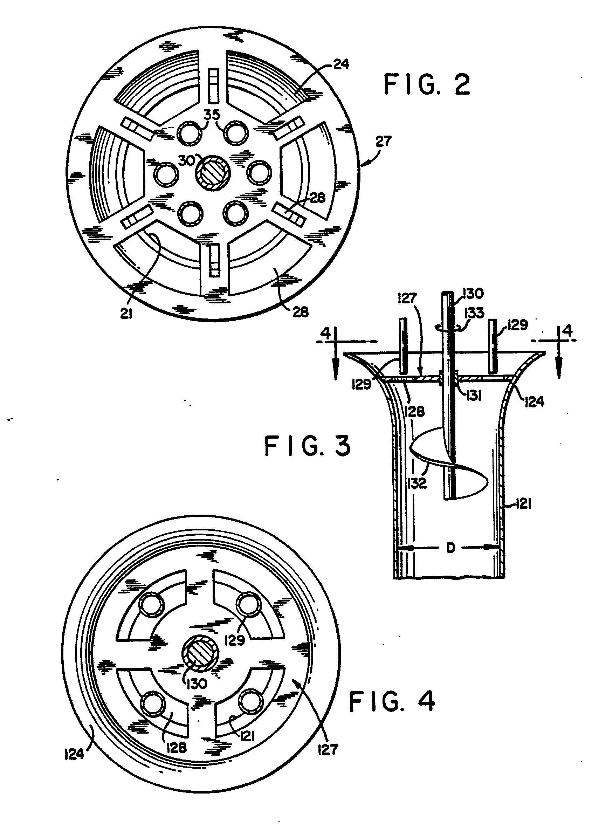

Figure 2 illustrates more clearly the details of construction of the plate member 27, as taken along line 2—2 of Figure 1. As shown, the plate member 27 provides a series of imperforate and perforate areas. The liquid flow passages 28 are provided in the form of six truncated pie-shaped openings and six small rectangular openings alternately spaced between one another. In the interior portion of the plate member symmetrically surrounding the shaft member 30 are six gas flow openings 35.

Figure 3 illustrates another embodiment of the invention. Shaft 130, provided with a helical screw impeller 132 is supported within a draft member 121. The inlet section of the draft member is outwardly and upwardly flared above a generally cylindrical main body portion of the draft member. The liquid flow restriction means comprises a horizontal plate member 127 which is fitted into the inlet section. Preferably, the liquid flow restriction means is positioned less than 0.75 times the draft member diameter D below the liquid inlet upper end of the draft member. The plate member is provided with a plurality of liquid flow passages 128 and a bushing or seal 131 for the shaft member 130. Gas conduits 129 forming the gas flow passage means are also provided with their upper ends located in the gas space above the normal liquid surface and with their lower ends terminating just above the liquid flow passages 128 provided in plate member 127.

Figure 4, taken along line 4—4 of Figure 3, more clearly illustrates the design of the plate member 127 and its relationship to the gas conduits and inlet section. The liquid flow passages 18 are provided in the form of four truncated pie-shaped openings. The gas conduits 129 terminate within the space enclosed by these openings. In operation, shaft member 130 is rotated by means of a motor and gear reduction unit (not shown) so as to pump liquid downwardly through the draft member 121. In this manner, liquid is drawn through the plurality of liquid flow openings 128 into the draft member. By rotating the impeller 132 at a sufficient rate, the flow of liquid through the liquid flow passages 128 induces a flow of gas through the gas conduits 129 by aspiration. A gas/liquid mixture is thereby formed in the inlet 124 and the resultant mixture is then pumped to the bottom of the associated tank by impeller 132 through the draft member 121.

According to the well-known venturi phenomenon, the flow of the fluid through a relatively abrupt constriction causes rapid acceleration of the flow and produces a sharp decrease in the fluid pressure across the constriction. In similar fashion, as fluid flows around an obstruction in the flow path, a drop in pressure will be observed at the downstream side of the obstruction. The present invention is designed to take full and optimum advantage of this phenomenon for aerating a liquid.

Rather than designing the liquid flow restriction means of the present invention to maximize the velocity change and thereby the pressure differential across the liquid flow restriction means, which accordingly will result in maximum gas aspiration, it has unexpectedly been found that optimum aeration performance occurs when the liquid flow restriction means are positioned at or proximate to the draft member liquid inlet, restricting cross-sectional liquid flow area of the liquid inlet to from 0.70 to 1.0 times cross-sectional area of the draft member.

To induce aspiration at optimum power expenditures, the inlet to the draft member must be located proximate to but beneath the normal liquid level. If the liquid inlet of the draft member is submerged too deeply within the aeration tank, it has been found that an excessive power expenditure is required to achieve aspiration proximate to the inlet. As a result, mass transfer efficiency of the contacting system tends to decrease. On the other hand, if the liquid inlet of the draft member is located too close to the normal liquid level, it has been found that regardless of the power utilization level there will be insufficient liquid flow through the liquid inlet to induce and support adequate aspiration, i.e., the system will be starved for liquid. As a result, the draft member liquid inlet should preferably be located between about 0.10 and 1.25 times the draft member diameter beneath the normal liquid level in the aeration tank. The lower end of this range, i.e., from 0.1 to 0.75, tends to be more properly applied to large draft member diameters, i.e., greater than 91 cm, while the upper end of the range, i.e., from 0.5 to 1.25, tends to be more properly applied to small draft member diameters, i.e., less than 91 cm. In most instances, submergences between 7.6 cm and 91 cm below the normal liquid level may advantageously be employed.

At its lower end, the draft member liquid outlet should preferably be spaced a substantial distance above the bottom of the tank in which the draft member is disposed. Although the prior art has taught that in order to provide adequate mixing, draft member outlets should be positioned closely adjacent the floor of the aeration tank, it has been found that at optimum operating conditions for the present invention such close spacings are not required in order to ensure adequate mixing. In fact, it has been found that extension of the draft member too near the tank bottom adversely rather than beneficially effects overall aeration efficiency. The reason for this effect is believed to be that the pressure field created within the draft member by the hydraulic interference between the higher velocity fluid flow existing the draft member and the floor of the aeration tank exerts a detrimental influence on the pumping capabilites of the axial pumping impeller. This effect in turn reduces the gas aspiration capability of the overall system. As a result, the draft member liquid outlet is preferably spaced at least two times the draft member diameter from the bottom of the aeration tank. Based on the same reason, the liquid outlet of the draft member is preferably free of constriction and not tapered in any manner whatsoever.

The impeller means is located at least 0.35 times and preferably at least 0.5 times the draft member diameter below the flow restricted liquid inlet upper end (dimension M in Figure 1).

The design of the liquid flow restriction means is critical insofar as it influences the design of the liquid flow passages. To satisfactorily utilize the pumping capabilities of the impeller to produce aspiration, liquid flow to the impeller must be unencumbered. By designing the liquid flow restriction means to provide for the aforementioned 0.7 to 1.0 ratio of the liquid flow area through the liquid flow restriction means to the draft member cross-sectional area a minimum resistance is placed on the liquid flow. In this manner, the frictional losses incurred in converting pumping energy to fluid flow kinetic energy are minimized.

The physical design relationship between the gas flow passage means and the liquid flow restriction means, however, does not appear to be critical. It is only necessary to position the gas flow passage means at the liquid flow restriction means. Preferably, the orientation is such that the liquid flowing through the liquid flow restriction means flows generally parallel to the direction of gas aspiration. In this manner, the aspiration level at a given power expenditure is maximized.

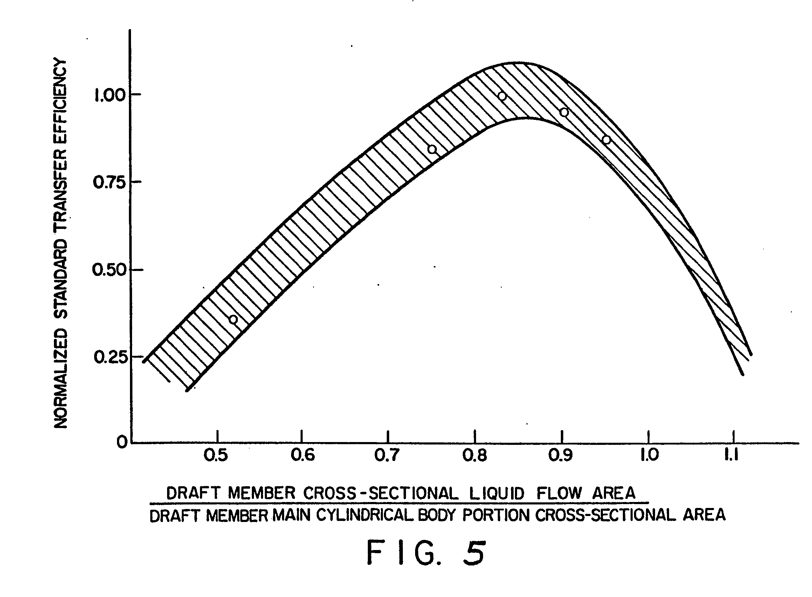

Referring now to Figure 5, there is illustrated the experimentally observed functional relationship between operating efficiency (normalized standard transfer efficiency) and the ratio of cross-sectional liquid flow area to cross-sectional area of the draft member. The data illustrated in Figure 5 were obtained in a 9.1 m test basin using an aerator configuration of the general type shown in Figure 1 herein. This system included a 1.22 m diameter draft member main cylindrical portion with a 0.91 m high, 30° inside angle conical inlet. The liquid inlet upper end of the draft member was positioned 0.43 m above the floor of the aeration tank. A helical screw impeller was used as the axial pumping impeller means and data were obtained at various inlet submergences.

As shown in Figure 5, the data illustrates a maximum in the range between 0.8 and 0.9 for the ratio of cross-sectional liquid flow area to cross-sectional area of the draft member. The present invention is practiced with the cross-sectional liquid flow area of the liquid inlet being from 0.70 to 1.0 times the cross-sectional area of the draft member, because, as reflected in the data of Figure 5, the apparatus operates within at least 75% of the peak standard transfer efficiency value in this area ratio range. At the high end of the area ratio ordinate of Figure 5, the graph indicates that there is a rather rapid degeneration in operating efficiency with increasing area ratio values, due to the increasing difficulty of achieving aspiration at progressively higher area ratio values. At the low end of the area ratio ordinate of Figure 5, the graph indicates a gradual degeneration in operating standard transfer efficiency. This degeneration is believed to be due to the combination of two interrelated effects. On the one hand, at increasingly lower area ratios, the quantity of gas aspirated relative to the quantity of liquid pumped increases. Since impeller means are less efficient in pumping gas-in-liquid mixtures as opposed to a single phase liquid, more power is required for fluid pumping at progressively lower values of the area ratio ordinate. Secondly, the higher degree of liquid flow restriction at the lower area ratio values results in a higher pressure drop accompanying the flow, so that additional power must be supplied by the impeller means to overcome such increased pressure drop.

In a preferred practice of the invention, it is desirable that the relationship between the cross-sectional liquid flow area of the draft member liquid inlet, $A_1$, the cross-sectional area of the main cylindrical body portion of the draft member, $A_2$, and the total cross-sectional area of the draft member liquid inlet as measured in a horizontal plane at the point of liquid flow restriction of the inlet, $A_3$, is governed by the following equation:

$$0.7 \leq \frac{A_1}{A_2} \leq 2.31 \times (A_3/A_2)^{0.75} - 1.4 \times (A_3/A_2)$$

provided that $A_1/A_2$ is no greater than 1.0.

By this equation, one is able to determine the cross-sectional liquid flow area of the draft member liquid inlet, $A_1$, for a given draft member configuration, i.e., given known values $A_2$ and $A_3$. For example, for a draft member configuration of the type shown in Figures 1—2, characterized by a cross-sectional area of the main cylindrical body portion ($A_2$) of 1,17 m², based on a main cylindrical body portion diameter of 1.22 m, and a total cross-sectional area of the draft member liquid inlet ($A_3$) as measured in a horizontal plane at the point of liquid flow restriction of the inlet of 4.06 m², a value for the cross-sectional liquid flow area of the draft member inlet ($A_1$) of between 0.82 m² and 1.17 m², for example 0.99 m², is calculated. Looking now at Figure 2, this cross-sectional liquid inlet flow area requirement (0.99 m²) could suitably be accommodated by the six larger liquid flow openings 28 each being about 0.149 m² in area and the six smaller liquid flow openings 28 each being about 0.016 m² in area.

## Claims

1. Apparatus for contacting liquid with a gas, comprising:

(a) a tank (10) containing a body of liquid;
(b) a generally tubular draft member (21, 121) oriented with its central axis aligned vertically and positioned in said tank with its upper end proximate to but beneath normal liquid level (16) in said tank to form a submerged liquid inlet, and with its lower end vertically spaced from the bottom (13) of said tank to form a submerged liquid outlet (22);
(c) a rotatable impeller (32, 132) having a diameter which is smaller than but closely proximate to the diameter of said draft member, positioned in said draft member between said inlet and said outlet thereof at least 0.35 times the draft member diameter below said liquid inlet for axial down-flow pumping of liquid through said draft member and inducement of circulation of liquid discharged from said draft member liquid outlet through said body of liquid in said tank to said draft member liquid inlet:
(d) means (18) for rotating said impeller; and
(e) gas flow passage means (29, 129) having an inlet exposed to a source of gas and an outlet positioned in the liquid flow path to said impeller, whereby liquid flowing through said draft member liquid inlet under action of said impeller aspirates gas from said gas flow passage means to effect gas-liquid contacting in the liquid pumped by said impeller, characterized in that
(f) liquid flow restriction means is provided;
(g) said liquid flow restriction means comprises a horizontally extending plate member (27, 127) positioned at or proximate to the liquid inlet of said draft member (21, 121) and above the impeller (32, 132);
(h) said plate member (27, 127) provides at least one liquid passage (28, 128) for flow of liquid entering said draft member to said impeller;
(i) said restriction means restricts the cross-sectional liquid flow area of the liquid inlet to from 0.7 to 1.0 times the cross-sectional area of the draft member; and
(j) said gas flow passage means outlet is positioned at said flow restriction means.

2. Apparatus according to claim 1, characterized in that said generally tubular draft member (21) has a cylindrical main body portion with an inverted frustoconical inlet section (24).

3. Apparatus according to claim 2, characterized in that said inverted frustoconical inlet section (24) has a height of from 0.25 to 0.75 times the diameter (D) of said cylindrical main body portion.

4. Apparatus according to claim 2 or 3, characterized in that enclosing walls of said inverted frustoconical inlet section (24) form an angle with the draft member central axis of from 10° to 40°.

5. Apparatus according to any one of the preceding claims, characterized in that said gas flow passage means comprise at least one gas flow opening (35) in said plate member (27), each gas flow opening surrounded by imperforate portions of said plate member, and separate gas flow conduits (29) extending through and leak-tightly enclosing each of said gas flow openings in said plate member, said conduits each terminating at a lower end in said plate member and communicating at an opposite end with a body of gas.

6. Apparatus according to any one of claims 1 to 4, characterized in that said gas flow passage means comprise a gas flow conduit (129) extending toward and terminating at each said plate member liquid passage (128) and joined at an opposite end to said source of gas, said gas flow conduit being of smaller cross-section than said liquid passage.

7. Apparatus according to any one of the preceding claims, characterized in that said axial pumping impeller (32, 132) comprises a member selected from the group consisting of pitched blade turbines, marine propellers and helical screw impellers.

8. Apparatus according to any one of the preceding claims, characterized in that said draft member liquid inlet is positioned from 0.10 to 1.25 times the diameter of said draft member (21, 121) beneath said normal liquid level (16) in said tank (10).

9. Apparatus according to claim 8, characterized in that said draft member liquid inlet is positioned from 7.6 cm to 91.4 cm beneath said normal liquid level (16) in said tank (10).

10. Apparatus according to claim 1, characterized in that the vertical spacing between said draft member liquid outlet (22) and the bottom (13) of said tank (10) is at least two times the diameter of said draft member (21, 121).

11. Apparatus according to any one of the preceding claims, characterized in that the vertical spacing between said draft member liquid inlet upper end and said axial pumping impeller (32, 132) is at least 0.5 times the diameter of said draft member (21, 121).

12. Apparatus according to any one of the preceding claims, characterized in that said source of gas supplies gas at substantially atmospheric pressure.

13. Apparatus according to any one of the preceding claims, characterized in that said means (18) for rotating said impeller (32, 132) effect rotation at a speed of at least 150 rpm.

14. Apparatus according to any one of the preceding claims, characterized in that the relationship between the cross-sectional liquid flow area ($A_1$) of the draft member liquid inlet, the cross-sectional area ($A_2$) of the main cylindrical body portion of the draft member (21, 121) and the total cross-sectional area ($A_3$) of the draft member liquid inlet as measured in a horizontal plane at the point of liquid flow restriction of the inlet, is governed by the following equation:

$$0.7 \leq A_1/A_2 \leq 2.31 \times (A_3/A_2)^{0.75} - 1.4 \times (A_3/A_2)$$

provided that $A_1/A_2$ is no greater than 1.0.

## Patentansprüche

1. Vorrichtung zum Inkontaktbringen von Flüssigkeit mit einem Gas mit:

(a) einem eine Flüssigkeitsmenge enthaltenden Behälter (10);

(b) einem im wesentlichen rohrförmigen Strömungsorgan (21, 121), dessen Mittelachse lotrecht ausgerichtet ist und das in dem Behälter derart angeordnet ist, daß sein oberes Ende nahe, aber unter dem normalen Flüssigkeitspegel (16) in dem Behälter liegt, um einen eingetauchten Flüssigkeitseinlaß zu bilden, und dessen unteres Ende unter Bildung eines eingetauchten Flüssigkeitsauslasses (22) lotrecht in Abstand von dem Boden (13) des Behälters liegt;

(c) einem drehbaren Schaufelrad (32, 132), dessen Durchmesser kleiner als der, aber weitgehend angenähert an den Durchmesser des Strömungsorgans ist und das in dem Strömungsorgan zwischen dessen Einlaß und Auslaß mindestens um das 0,35-fache des Strömungsorgandurchmessers unter dem Flüssigkeitseinlaß sitzt, um Flüssigkeit durch das Strömungsorgan hindurch axial nach unten zu pumpen und eine Zirkulation von aus dem Flüssigkeitsauslaß des Strömungsorgans austretender Flüssigkeit durch die in dem Behälter befindliche Flüssigkeitsmenge hindurch zu dem Flüssigkeitseinlaß des Strömungsorgans zu veranlassen;

(d) Mitteln (18) zum Drehen des Schaufelrades; und

(e) Gasflußdurchlaßmitteln (29, 129) mit einem einer Gasquelle ausgesetzten Einlaß und einem in dem Flüssigkeitsströmungsweg zu dem Schaufelrad liegenden Auslaß, wodurch unter dem Einfluß des Schaufelrades durch den Flüssigkeitseinlaß des Strömungsorgans strömende Flüssigkeit Gas von den Gasflußdurchlaßmitteln ansaugt, um in der von dem Schaufelrad gepumpten Flüssigkeit Gas und Flüssigkeit miteinander in Kontakt zu bringen, dadurch gekennzeichnet, daß

(f) eine Flüssigkeitsstromdrosselanordnung vorgesehen ist;

(g) die Flüssigkeitsstromdrosselanordnung ein waagrecht verlaufendes Plattenbauteil (27, 127) aufweist, das an oder nahe dem Flüssigkeitseinlaß des Strömungsorgans (21, 121) und über dem Schaufelrad (32, 132) angeordnet ist;

(h) das Plattenbauteil (27, 127) mindestens einen Flüssigkeitsdurchlaß (28, 128) für in das Strömungsorgan eintretende, zu dem Schaufelrad strömende Flüssigkeit aufweist;

(i) die Drosselanordnung den Flüssigkeitsströmungsquerschnitt des Flüssigkeitseinlasses auf das 0,7- bis 1,0-fache der Querschnittsfläche des Strömungsorgans drosselt; und

(j) der Auslaß der Gasflußdurchlaßmittel an der Stromdrosselanordnung liegt.

2. Vorrichtung nach Anspruch 1, dadurch gekennzeichnet, daß das im wesentlichen rohrförmige Strömungsorgan (21) einen zylindrischen Hauptkörperteil mit einem umgekehrt kegelstumpfförmigen Einlaßabschnitt (24) aufweist.

3. Vorrichtung nach Anspruch 2, dadurch gekennzeichnet, daß der umgekehrt kegelstumpfförmige Einlaßabschnitt (24) eine Höhe von 0,25- bis zum 0,75-fachen des Durchmessers (D) des zylindrischen Hauptkörperteils hat.

4. Vorrichtung nach Anspruch 2 oder 3, dadurch gekennzeichnet, daß die Umfassungswände des umgekehrt kegelstumpfförmigen Einlaßabschnitts (24) mit der Mittelachse des Strömungsorgans einen Winkel von 10° bis 40° bilden.

5. Vorrichtung nach einem der vorhergehenden Ansprüche, dadurch gekennzeichnet, daß die Gasflußdurchlaßmittel mindestens eine Gasflußöffnung (35) in dem Plattenbauteil (27) aufweisen, daß jede Gasflußöffnung von nichtgelochten Teilen des Plattenbauteils umgeben ist und daß gesonderte Gasflußleitungen (29) durch jede der Gasflußöffnungen in dem Plattenbauteil hindurchreichen und diese leckdicht umschließen, wobei die Leitungen jeweils am unteren Ende in dem Plattenbauteil enden und am gegenüberliegenden Ende mit einer Gasmenge in Verbindung stehen.

6. Vorrichtung nach einem der Ansprüche 1 bis 4, dadurch gekennzeichnet, daß die Gasflußdurchlaßmittel eine sich in Richtung auf jeden Flüssigkeitsdurchlaß (128) des Plattenbauteils erstreckende und dort endende Gasflußleitung (129) aufweisen, die am gegenüberliegenden Ende mit der Gasquelle verbunden ist und die einen kleineren Querschnitt als der Flüssigkeitsdurchlaß hat.

7. Vorrichtung nach einem der vorhergehenden Ansprüche, dadurch gekennzeichnet, daß das Axialpump-Schaufelrad (32, 132) ein Bauteil aufweist, das aus der aus Turbinen mit schräggestellten Schaufeln, Schiffspropellern und wendelförmigen Schraubenschaufelrädern bestehenden Gruppe ausgewählt ist.

8. Vorrichtung nach einem der vorhergehenden Ansprüche, dadurch gekennzeichnet, daß der Flüssigkeitseinlaß des Strömungsorgans zwischen dem 0,10- und dem 1,25-fachen des Durchmessers des Strömungsorgans (21, 121) unterhalb des normalen Flüssigkeitspegels (16) in dem Behälter (10) liegt.

9. Vorrichtung nach Anspruch 8, dadurch gekennzeichnet, daß der Flüssigkeitseinlaß des Strömungsorgans zwischen 7,6 cm und 91,4 cm unter dem normalen Flüssigkeitspegel (16) in dem Behälter (10) liegt.

10. Vorrichtung nach Anspruch 1, dadurch gekennzeichnet, daß der lotrechte Abstand zwischen dem Flüssigkeitsauslaß (22) des Strömungsorgans und dem Boden (13) des Behälters (10) mindestens gleich dem 2-fachen des Durchmessers des Strömungsorgans (21, 121) ist.

11. Vorrichtung nach einem der vorhergehenden Ansprüche, dadurch gekennzeichnet, daß der lotrechte Abstand zwischen dem oberen Ende des Flüssigkeitseinlasses des Strömungsorgans und dem Axialpump-Schaufelrad (32, 132) mindestens gleich dem 0,5-fachen des Durchmessers des Strömungsorgans (21, 121) ist.

12. Vorrichtung nach einem der vorhergehenden Ansprüche, dadurch gekennzeichnet, daß die Gasquelle Gas mit im wesentlichen Atmosphärendruck bereitstellt.

13. Vorrichtung nach einem der vorhergehenden Ansprüche, dadurch gekennzeichnet, daß die Mittel (18) zum Drehen des Schaufelrades (32, 132) eine Drehung mit einer Drehzahl von mindestens 150 $min^{-1}$ bewirken.

14. Vorrichtung nach einem der vorhergehenden Ansprüche, dadurch gekennzeichnet, daß die Beziehung zwischen dem Flüssigkeitsströmungsquerschnitt $(A_1)$ des Flüssigkeitseinlasses des Strömungsorgans, der Querschnittsfläche $(A_2)$ des zylindrischen Hauptkörperteils des Strömungsorgans (21, 121) und der Gesamtquerschnittsfläche $(A_3)$ des Flüssigkeitseinlasses des Strömungsorgans gemessen in einer waagrechten Ebene an der Stelle der Flüssigkeitsströmungsdrosselung des Einlasses, der folgenden Gleichung entspricht:

$$0.7 \leq A_1/A_2 \leq 2.31 \times (A_3/A_2)^{0.75} - 1.4 \times (A_3/A_2)$$

vorausgesetzt, daß $A_1/A_2$ nicht größer als 1,0 ist.

## Revendications

1. Appareil pour mettre en contact un liquide avec un gaz, comprenant:

(a) une cuve (10) contenant une masse de liquide;

(b) un élément de tirage (21, 121) sensiblement tubulaire orienté de façon que son axe central soit aligné verticalement, et positionné à l'intérieur de ladite cuve de façon que son extrémité supérieure soit proche, mais au-dessous du niveau normal (16) du liquide dans ladite cuve pour former une entrée de liquide immergée, et que son extrémité inférieure soit espacée verticalement du fond (13) de ladite cuve pour former une sortie de liquide immergée (22);

(c) un organe rotatif d'impulsion (32, 132) ayant un diamètre qui est inférieur à, mais très proche du diamètre dudit élément de tirage, positionné dans ledit élément de tirage entre ladite entrée et ladite sortie de celui-ci, à au moins 0,35 fois le diamètre de l'élément de tirage au-dessous de ladite entrée de liquide pour pomper axialement vers le bas du liquide à travers ledit élément de tirage et induire une circulation de liquide déchargé par ladite sortie de liquide dudit élément de tirage, à travers ladite masse de liquide dans ladite cuve, vers ladite entrée de liquide de l'élément de tirage;

(d) des moyens (18) destinés à faire tourner ledit organe d'impulsion; et

(e) une canalisation (29, 129) d'écoulement de gaz ayant une entrée exposée à une source de gaz et une sortie positionnée sur le trajet d'écoulement du liquide vers ledit organe d'impulsion, de manière que le liquide s'écoulant par ladite entrée de liquide de l'élément de tirage, sous l'action dudit organe d'impulsion, aspire un gaz de ladite canalisation d'écoulement de gaz pour effecteur une mise en contact gaz-liquide dans le liquide pompé par ledit organe d'impulsion, caractérisé en ce que

(f) des moyens de limitation de l'écoulement de liquide sont prévus;

(g) lesdits moyens de limitation de l'écoulement de liquide comprennent une plaque (27, 127) s'étendant horizontalement, positionnée à ou à proximité de l'entrée de liquide dudit élément de tirage (21, 121) et au-dessous de l'organe d'impulsion (32, 132);

(h) ladite plaque (27, 127) présente au moins un passage de liquide (28, 128) pour l'écoulement d'un liquide entrant dans ledit élément de tirage vers ledit organe d'impulsion;

(i) lesdits moyens de limitation limitent l'aire de la section d'écoulement de liquide de l'entrée der liquide à une valeur comprise entre 0,7 et 1,0 fois l'aire de la section de l'élément de tirage; et

(j) la sortie de la canalisation d'écoulement de gaz est positionnée auxdits moyens de limitation d'écoulement.

2. Appareil selon la revendication 1, caractérisé en ce que ledit élément de tirage (21) sensiblement tubulaire comporte un corps principal cylindrique ayant une section d'entrée tronconique inversée (24).

3. Appareil selon la revendication 2, caractérisé en ce que ladite section d'entrée tronconique inversée (24) présente une hauteur comprise entre 0,25 et 0,75 fois le diamètre (D) dudit corps principal cylindrique.

4. Appareil selon la revendication 2 ou 3, caractérisé en ce que les parois renfermant ladite section d'entrée tronconique inversée (24) forment un angle de 10° à 40° avec l'axe central de l'élément de tirage.

5. Appareil selon l'une quelconque des revendications précédentes, caractérisé en ce que ladite canalisation d'écoulement de gaz comprend au moins une ouverture (35) d'écoulement de gaz ménagée dans ladite plaque (27), chaque ouverture d'écoulement de gaz étant entourée par des parties non perforées de ladite plaque, et des conduits séparés (29) d'écoulement de gas s'étendant à travers de en entourant de façon étanche aux fuites chacune desdites ouvertures d'écoulement de gaz de ladite plaque, lesdits conduits aboutissant chacun, par une extrémité inférieure, dans ladite plaque et communiquant par une extrémité opposée avec une masse de gaz.

6. Appareil selon l'une quelconque des revendications 1 à 4, caractérisé en ce que ladite canalisation d'écoulement de gaz comprend un conduit (129) d'écoulement de gaz s'étendant vers et aboutissant à chaque passage (128) de liquide de la plaque et relié, par une extrémité opposée, à ladite source de gaz, ledit conduit d'écoulement de gaz étant d'une section inférieure à celle dudit passage de liquide.

7. Appareil selon l'une quelconque des revendications précédentes, caractérisé en ce que ledit organe d'impulsion (32, 132) de pompage axial comprend un élément choisi dans le groupe comportant des turbines à ailettes inclinées, des hélices de marine et des organes d'impulsion à vis hélicoïdales.

8. Appareil selon l'une quelconque des revendications précédentes, caractérisé en ce que ladite entrée de liquide de l'élément de tirage est positionnée à une distance comprise entre 0,10 et 1,25 fois le diamètre dudit élément de tirage (21, 121) au-dessous dudit niveau normal de liquide (16) dans ladite cuve (10).

9. Appareil selon la revendication 8, caractérisé en ce que ladite entrée de liquide de l'élément de tirage est positionnée à une distance de 7,6 cm à 91,4 cm au-dessous dudit niveau normal de liquide (16) dans ladite cuve (10).

10. Appareil selon la revendication 1, caractérisé en ce que l'espacement vertical entre la sortie (22) de liquide de l'élément de tirage et le fond (13) de ladite cuve (10) est égal à au moins deux fois le diamètre dudit élément de tirage (21, 121).

11. Appareil selon l'une quelconque des revendications précédentes, caractérisé en ce que l'espacement vertical entre l'extrémité supérieure d'entrée de liquide dudit élément de tirage et ledit organe d'impulsion (32, 132) de pompage axial est égal à au moins 0,5 fois le diamètre dudit élément de tirage (21, 121).

12. Appareil selon l'une quelconque des revendications précédentes, caractérisé en ce que ladite source de gaz fournit du gaz sensiblement à la pression atmosphérique.

13. Appareil selon l'une quelconque des revendications précédentes, caractérisé en ce que lesdits moyens (18) destinés à faire tourner ledit organe d'impulsion (32, 132) produisent une rotation à une vitesse d'au moins 150 tr/min.

14. Appareil selon l'une quelconque des revendications précédentes, caractérisé en ce que la relation entre l'aire de la section d'écoulement de liquide ($A_1$) de l'entrée de liquide de l'élément de tirage, l'aire ($A_2$) de la section du corps cylindrique principal de l'élément de tirage (21, 121) et l'aire totale ($A_3$) de la section de l'entrée de liquide de l'élément de tirage, telle que mesurée dans un plan horizontal, au point de limitation d'écoulement du liquide de l'entrée, est déterminée par l'équation suivante:

$$0{,}7 \leq A_1/A_2 \leq 2{,}31 \times (A_3/A_2)^{0{,}75} - 1{,}4 \times (A_3/A_2)$$

pourvu que $A_1/A_2$ ne soit pas supérieur à 1,0.

0027911

FIG. 1

FIG. 2

FIG. 3

FIG. 4

DRAFT MEMBER CROSS-SECTIONAL LIQUID FLOW AREA
───────────────────────────────────────────────────
DRAFT MEMBER MAIN CYLINDRICAL BODY PORTION CROSS-SECTIONAL AREA

FIG. 5